# EUROPEAN PATENT SPECIFICATION

(11) **EP 3 680 174 B1**
(45) Date of publication and mention of the grant of the patent: **13.11.2024**
(21) Application number: 19208975.3
(22) Date of filing: 13.11.2019
(51) Int. Cl.: B64D 27/30, B64C 11/48, B64D 27/02, H02K 7/116, H02K 16/02

(54) **ROTARY PROPULSION SYSTEMS AND METHODS OF PROPELLING VEHICLES USING ROTARY PROPULSION SYSTEMS**
DREHANTRIEBSSYSTEME UND VERFAHREN ZUM ANTRIEB VON FAHRZEUGEN UNTER VERWENDUNG VON DREHANTRIEBSSYSTEMEN
SYSTÈMES DE PROPULSION ROTATIFS ET PROCÉDÉS DE PROPULSION DE VÉHICULES À L'AIDE DE SYSTÈMES DE PROPULSION ROTATIFS

(30) Priority: 08.01.2019 US 201916242479
(43) Date of publication of application: 15.07.2020
(73) Proprietor: Hamilton Sundstrand Corporation, Charlotte, NC 28217-4578 (US)
(72) Inventor: VEILLEUX, Leo J., Wethersfield, CT Connecticut 06109 (US); RIBAROV, Lubomir A., West Hartford, CT Connecticut 06107 (US)
(74) Representative: Dehns

(56) References cited:
- EP-A1- 3 632 792
- CN-A- 104 753 296
- CN-A- 107 399 431
- DE-A1- 102011 053 787
- DE-A1- 102016 207 428
- US-A1- 2011 281 679
- US-A1- 2017 260 872
- US-A1- 2018 044 029
- US-A1- 2018 339 780

## Description

### BACKGROUND

The subject matter disclosed herein generally relates to the propulsion systems, and more particularly to electric propulsion systems for vehicles like aircraft.

Vehicles, such as ships and aircrafts, commonly include propellers to provide motive force to the vehicles. The propellers are supported for rotation relative to the vehicle and are typically driven by an engine. The engine is generally connected mechanically to the propeller through a direct mechanical connection, such as through a coupling, to provide mechanical rotation to the propeller. In some vehicles, such as vehicles employing open rotor arrangements with more than one propeller, the engine drive arrangement can be relatively noisy in comparison to closed rotor engines.

### BRIEF SUMMARY

According to one embodiment, a rotary propulsion system is provided as defined by claim 1.

In an embodiment the fan includes a plurality of open-rotor fan blades having a scimitar shape.

Embodiments may include a generator connected to the electric motor and a gas turbine engine operably connected to the generator wherein rotational speed of the gas turbine engine is independent of rotational speed of the fan.

In an embodiment the reduction gear set includes a planetary gear arrangement.

In an embodiment the planetary gear arrangement axially overlaps the electric motor.

In an embodiment the planetary gear arrangement is axially offset from the electric motor.

In an embodiment the planetary gear arrangement comprises a sun gear fixed in rotation relative to the permanent magnet, a ring gear fixed in rotation relative to the fan, and two or more planetary gears distributed circumferentially about the rotation axis and intermeshed with the sun gear and the ring gear.

In an embodiment the second reduction gear set arranged axially on a side of the first reduction gear set opposite the electric motor.

According to another embodiment, an aircraft is provided as defined by claim 8.

In an embodiment the rotation axis is substantially horizontal relative to the direction of gravity when the aircraft is normal, level flight.

In an embodiment the rotation axis is substantially vertical relative to the direction of gravity when the aircraft is normal, level flight.

According to yet another embodiment a method of propelling an aircraft is provided as defined by claim 10.

Technical effects of embodiments of the present disclosure include providing a relatively compact, electric motor-driven contra-rotating rotary propulsion system. In certain embodiments rotary propulsion systems are provided that allow for fans to operate at difference speeds, limiting noise. In accordance with certain embodiments rotary propulsion systems are provided with reduction gear sets, allowing the employment of electric motors with relatively high power-density and high propulsive force and torque to the system fan.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The following descriptions should not be considered limiting in any way. With reference to the accompanying drawings, like elements are numbered alike:
FIGS. 1-3 are schematic views of aircraft propulsion systems constructed in accordance with the present disclosure, showing an open rotor propulsion system driven by electric motors;
FIGS. 4-6 are schematic views of a first example not covered by the appended claims, schematically showing a propulsion system having a single fan driven by an electric motor through an intervening reduction gear set, respectively;
FIGS. 7-9 are schematic views of another embodiment of the aircraft propulsion system of FIG. 1, schematically showing a propulsion system having fans driven by separate electric motors through separate reduction gear sets, respectively;
FIGS. 10-12 are schematic views of yet another embodiment of the aircraft propulsion system of FIG. 1, schematically showing a propulsion system having fans driven by separate axial flux-type electric motors through separate reduction gear sets, respectively; and
FIG. 13 is a block diagram of a method of propelling an aircraft, showing steps of the method.

### DETAILED DESCRIPTION

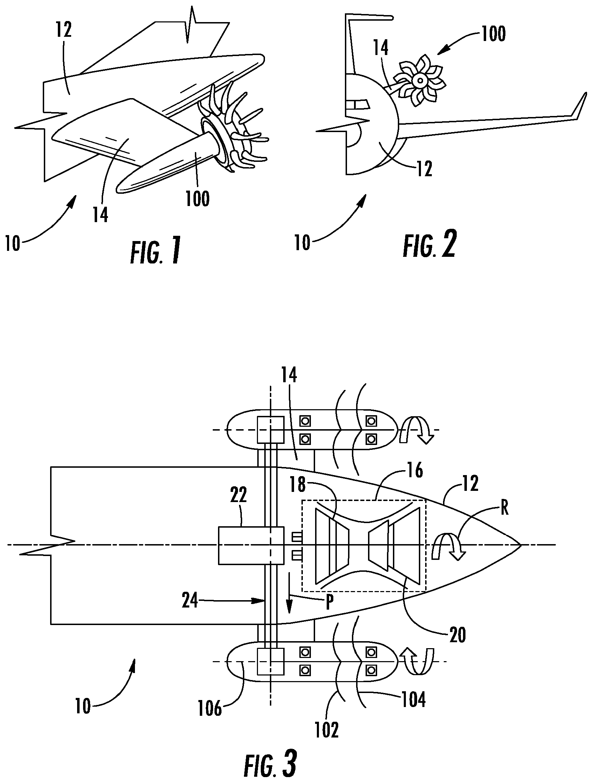

Reference will now be made to the drawings wherein like reference numerals identify similar structural features or aspects of the subject disclosure. For purposes of explanation and illustration, and not limitation, a partial view of an exemplary embodiment of a rotary propulsion system in accordance with the disclosure is shown in FIG. 1 and is designated generally by reference character 100. Other embodiments of rotary propulsion systems, aircraft having rotary propulsion systems, and methods of propelling aircraft using rotary propulsion systems in accordance with the present disclosure, or aspects thereof, are provided in Figs. 2-13, as will be described. The systems and methods described herein can be used for rotary propulsion systems for aircraft, such as in rotary propulsion systems employing contra-rotating fans, though the present disclosure is not limited to rotary propulsion systems employing control rotating fans or to aircraft in general.

Referring to FIGS. 1-3, an aircraft 10 including the rotary propulsion system 100, e.g., a fixed-wing aircraft or a rotorcraft, is shown. The aircraft 10 includes an airframe 12 with one or more pylon 14. The pylon 14 supports the rotary propulsion system 100, which in the embodiment shown in FIGS. 1-3 includes a first fan 102 and a second fan 104 supported for rotation about a rotation axis 106. Although a specific architecture is shown in FIGS. 1-3 it is to be understood and appreciated that other aircraft architectures can also benefit from the present disclosure, such as aircraft architectures having a singular rotary propulsion system 100 or aircraft architectures having more than two rotary propulsion systems 100. For example, it is contemplated the rotation axis 106 about which the rotary propulsion system 100 is arranged can be substantially horizontal relative to gravity during normal, level flight. It is also contemplated that, in accordance with certain embodiments, the rotation axis 106 about which the rotary propulsion system 100 is arranged can be substantially vertical relative to gravity during normal, level flight.

As shown in FIG. 3, the aircraft 10 includes a gas turbine engine 16 with a compressor section 18 and a turbine section 20, a generator 22 and a power bus 24. The gas turbine engine 16 is carried within the airframe 12 and is operatively connected to the generator 22. The generator 22 is configured to generate electrical power P for the rotary propulsion system 100 and is connected to the rotary propulsion system 100 by the power bus 24. In the illustrated embodiment the generator 22 is an alternating current (AC) generator configured and adapted to provide variable frequency AC power to the rotary propulsion system 100 to the control rotational speed and direction of the first fan 102 and the second fan 104. In this respect it is contemplated that the connection of the gas turbine engine 16 be indirect, gas turbine engine 16 providing rotation R to the generator 22, which the generator 22 converts to electrical power P for provision the rotary propulsion system 100 via the power bus 24. Rotational speed of the gas turbine engine 16 is therefore independent of rotational speed of the first fan 102 and the second fan 104.

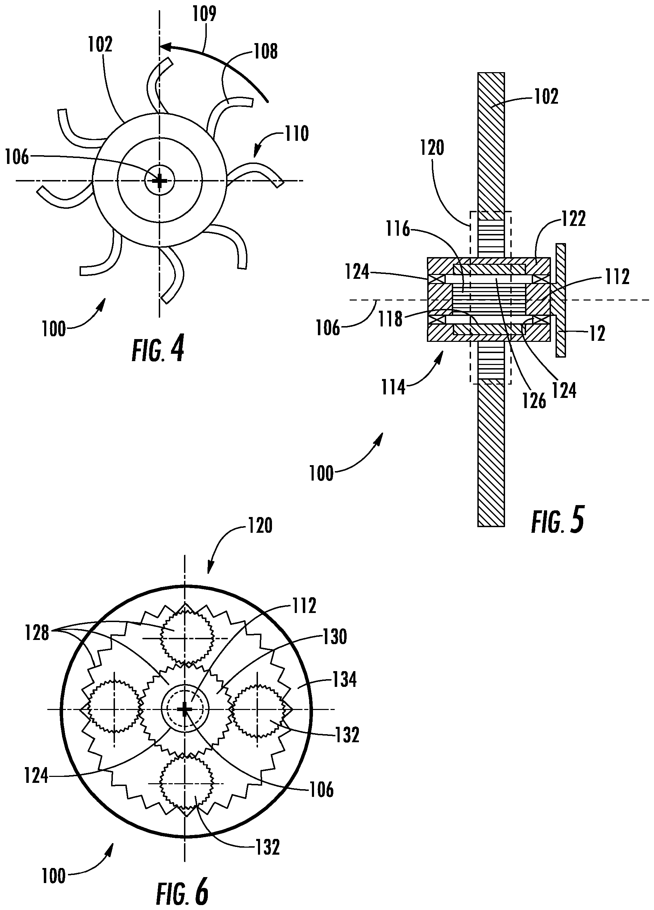

Referring to FIGS. 4-6, the rotary propulsion system 100 is shown according to an example not covered by the appended claims. As shown in FIG. 4, the rotary propulsion system 100 includes a singular fan 102 arranged as an open-rotor. The fan 102 includes a plurality of fan blades 108 distributed circumferentially about the rotation axis 106 for rotary movement 109 about the rotation axis 106. In the illustrated embodiment the fan 102 includes eight (8) fan blades 108. This is for illustration purposes only and is non-limiting. As will be appreciated by those of skill in the art in view of the present disclosure the fan 102 can have fewer than eight (8) fan blades 108 or more than eight (8) fan blades 108, as suitable for an intended application. In the illustrated embodiment the fan blades 108 each have a scimitar shape 110, i.e., with increasing sweep along the leading edge of the blade, between radial inner and radially outer ends of the blade. As will be appreciated by those of skill in the art in view of the present disclosure, the scimitar shape 110 of the fan blades 108 improving efficiency of the fan 102 during operation.

As shown in FIG. 5, the rotary propulsion system 100 includes a singular fan 102, a shaft 112, and electric motor 114 with windings 116 and one or more permanent magnet 118, and a reduction gear set 120. The fan 102 is arranged along the rotation axis 106. The electric motor 114 with the windings 116 and the one or more permanent magnet 118 is arranged along the rotation axis 106 is and is operatively connected to the fan 102. The reduction gear set 120 is arranged along the rotation axis 106 and couples the electric motor 114, the one or more permanent magnet 118 being rotatable relative the windings 116 and the fan 102 to rotate the fan 102 using the electric motor 114 at a rotational speed RF that is lower than a rotational speed RM of the one or more permanent magnet 118.

The shaft 112 is fixed relative to the airframe 12. The windings 116 are fixed relative to the shaft 112 and are polyphase windings. In this respect the windings 116 receive AC power P from the generator 22 (shown in FIG. 3) and generate therewith a rotating magnetic field that rotates according to the frequency of AC power P. The one or more permanent magnet 118 is carried by a rotor 122 of the electric motor 114, is supported for rotation relative to the windings 116 by bearings 124, and is magnetically coupled to the one or more windings 116 across a gap 126 to rotate at a speed correlated to the frequency of the AC power applied to the windings 116. The reduction gear set 120 couples the rotor 122 of the electric motor 114 to the fan 102, which reduces rotational speed of the fan 102 relative to the rotor 122 according the gear ratio of the reduction gear set 120.

As shown in FIG. 6, the reduction gear set 120 includes a planetary gear arrangement 128. The planetary gear arrangement 128 axially overlaps the electric motor 114 (shown in FIG. 5) to provide an axially compact arrangement and includes a sun gear 130, a plurality of planetary gears 132 and a ring gear 134. The sun gear 130 is fixed in rotation relative to the permanent magnet 118 of the electric motor 114. The ring gear 134 is fixed in rotation relative to the singular fan 102 and extends circumferentially about the rotation axis 106. The plurality of planetary gears 132 are distributed circumferentially about the rotation axis 106 and are intermeshed with the sun gear 130 and the ring gear 134. The bearings 124 are arranged between the sun gear 130 and the shaft 112, the sun gear 130 thereby being rotatable relative to the shaft 112.

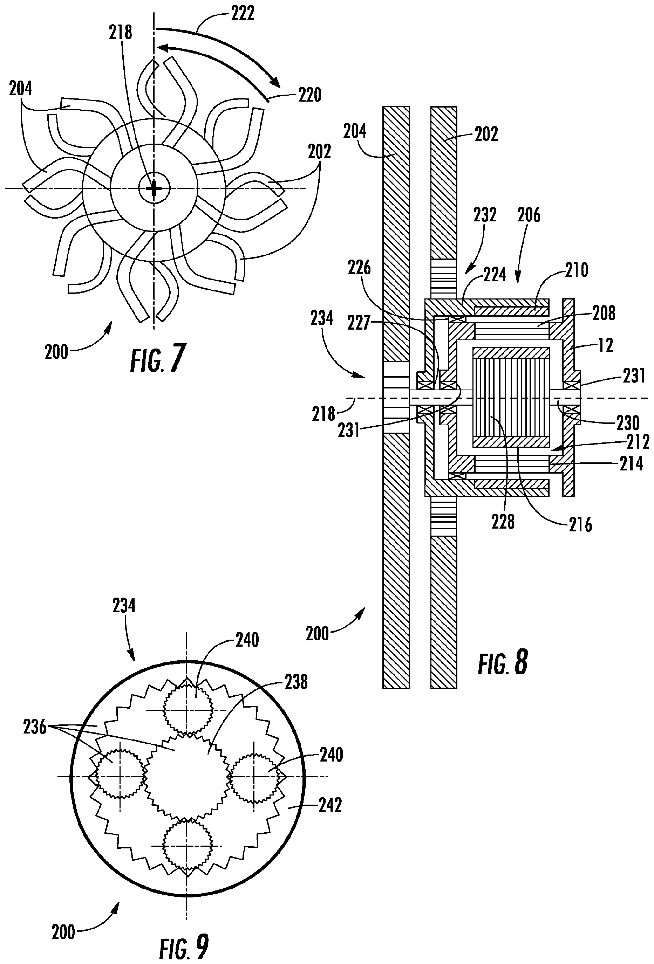

Referring to FIGS. 7-9, a rotary propulsion system 200 is shown. The rotary propulsion system 200 is similar to the rotary propulsion system 100 (shown in FIG. 5) and additionally includes two fans. In this respect the rotary propulsion system 200 includes a first fan 202, a second fan 204, a first electric motor 206 with windings 208 and one or more permanent magnets 210, and a second electric motor 212 with windings 214 and one or more permanent magnets 216. The first fan 202 and the second fan 204 are each arranged along a rotation axis 218, the second fan 204 being arranged along the rotation axis 218 on a side of the first fan 202 opposite the first electric motor 206 and the second electric motor 212. As shown in FIG. 7, the first fan 202 and the second fan 204 are contra-rotating, the first fan 202 arranged for rotation in a direction 220 opposite a rotation direction 222 of the second fan 204. In certain embodiments the rotational speed of the second fan 204 may be different than that of the first fan 202, e.g., faster or slower. As will be appreciated by those of skill in the art, varying the rotational speed of one of the first fan 202 and the second fan 204 relative to the other of the first fan 202 and the second fan 204 can limit the noise of the rotary propulsion system 200 during operation.

The windings 208 of the first electric motor 206 and the windings 214 of the second electric motor 212 are both fixed relative to the airframe 12. The permanent magnets 210 of the first electric motor 206 and the permanent magnets 216 of the second electric motor 212 are each supported for rotation relative to airframe 12 in a radial flux-type arrangement. In this respect the one or more permanent magnet 210 of the first electric motor 206 is arranged on a first rotor 224, is arranged for rotation about the rotation axis 218, is supported by first bearings 226 for rotation relative to the airframe 12, and is supported by second bearings 227 for rotation relative to the second electric motor 212.

The one or more permanent magnet 216 of the second electric motor 212 is arranged on a second rotor 228 and is arranged for rotation about the rotation axis 218, the windings 208 and the one or more permanent magnet 210 of the first electric motor 206 extending circumferentially about the windings 214 and the one or more permanent magnet 216 of the second electric motor 212. The one or more permanent magnet 216 of the second electric motor 212 is in turn fixed relative to a shaft 230, the shaft 230 in turn being supported for rotation relative to the airframe 12 by third bearings 231.

A first reduction gear set 232 couples the first fan 202 to the first electric motor 206 and a second reduction gear set 234 couples the second fan 204 to the second electric motor 212. The first reduction gear set 232 is similar to the reduction gear set 120 (shown in FIG. 5) and supports the first fan 202 for rotation at a rotational speed that is lower than a rotational speed of the first electric motor 206 according to the gear ratio of the first reduction gear set 232. The second reduction gear set 234 supports the second fan 204 for rotation relative to the second electric motor 212 according to the gear ratio of the second reduction gear set 234.

As shown in FIG. 9, the second reduction gear set 234 includes a planetary gear arrangement 236. The planetary gear arrangement 236 is axially offset from the first electric motor 206 (shown in FIG. 8) and the second electric motor 212 (shown in FIG. 8) and includes sun gear 238, a plurality of planetary gears 240, and a ring gear 242. The sun gear 238 is arranged along the rotation axis 218 and is fixed relative to the shaft 230. The ring gear 242 extends about the sun gear 238 (shown in FIG. 7) and is fixed relative to the second fan 204 (shown in FIG. 8). The plurality of planetary gears 240 are distributed circumferentially about the sun gear 238 and are intermeshed with the sun gear 238 and the ring gear 242.

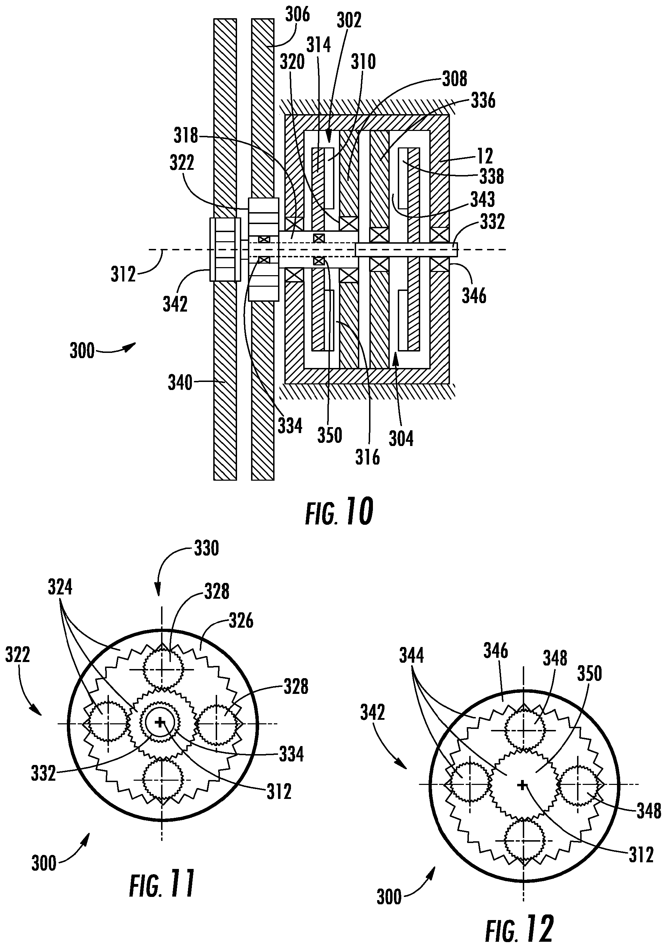

Referring now to FIGS. 10-12, a rotary propulsion system 300 is shown. The rotary propulsion system 300 is similar to the rotary propulsion system 200 (shown in FIG. 7) and additionally includes a first electric motor 302 and a second electric motor 304 having axial flux-type arrangements. In this respect the first electric motor 302 is operatively associated with a first fan 306 and includes a winding 308 and one or more permanent magnet 310. The winding 308 of the first electric motor 302 is fixed relative to the airframe 12 and extends radially from a rotation axis 312. The one or more permanent magnet 310 of the first electric motor 302 is supported by a rotor 314, extends radially from the rotation axis 312, and is axially spaced from the winding 308 by an axial gap 316. The rotor 314 includes a shaft portion 318 that extends along the rotation axis 312, is supported for rotation about the rotation axis 312 relative to the winding 308 by a bearings 320, and is coupled to the first fan 306 by a first reduction gear set 322.

As shown in FIG. 11, the first reduction gear set 322 includes a planetary gear arrangement 324. The planetary gear arrangement 324 includes a ring gear 326, a plurality of planetary gears 328 and a sun gear 330. The ring gear 326 extends circumferentially about the rotation axis 312 and is fixed to relative to the first fan 306. The plurality of planetary gears 328 are distributed about the rotation axis 312 and are intermeshed with the ring gear 326 and the sun gear 330. The sun gear 330 is arranged along the rotation axis 312, is fixed in rotation relative to the shaft portion 318 (shown in FIG. 10), and supported for rotation relative to a shaft 332 by bearings 334, which is arranged radially inward of teeth of the sun gear 330. As will be appreciated by those of skill in the art in view of the present disclosure, the first reduction gear set 322 allows the first fan 306 to rotate at a rotational speed that is lower than a rotational speed of the first electric motor 302 according to the gear ratio of the first reduction gear set 322, enabling the use of a relatively high-speed motor run at high speed to provide high torque to the first fan 306.

With continuing reference to FIG. 10, the second electric motor 304 is arranged on a side of the first electric motor 302 axially opposite the first fan 306, includes a winding 336 and one or more permanent magnet 338, and is operatively connected to a second fan 340 through a second reduction gear set 342. In this respect the winding 336 is fixed to the airframe 12, extends radially from the rotation axis 312, and opposes the one or more permanent magnet 338 across an axial gap 343. The one or more permanent magnet 338 extends radially from the rotation axis 312 and is fixed relative to the shaft 332.

The shaft 332 is arranged along the rotation axis 312 and is supported for rotation relative to the airframe 12 relative by bearings 346. The shaft 332 is also supported for rotation relative to the shaft portion 318 by bearings 350 and is further supported for rotation relative to the sun gear 330 (shown in FIG. 11) of the first reduction gear set 322 by the bearings 334. This allows the shaft 332 to rotate about the rotation axis 312 independent of both the first electric motor 302 and the first fan 306, thereby operably connecting the second electric motor 304 to the second fan 340.

Operable connection of the second electric motor 304 to the second fan 340 is via the second reduction gear set 342. In this respect, as shown in FIG. 12, the second reduction gear set 342 includes a planetary gear arrangement 344 including a ring gear 346, a plurality of planetary gears 348 and a sun gear 350. The ring gear 346 extends about the rotation axis 312 and is fixed relative to the second fan 340. The plurality of planetary gears 348 are distributed about the rotation axis 312 and are intermeshed with the ring gear 346 and the sun gear 350. The sun gear 350 is arranged along the rotation axis 312 and is fixed in rotation relative to the shaft 332. As will be appreciated by those of skill in the art, this allows the second electric motor 304 to drive the second fan 340 at a rotational speed that this lower than a rotational speed of the second electric motor 304, i.e., according to the gear ratio of the second reduction gear set 342.

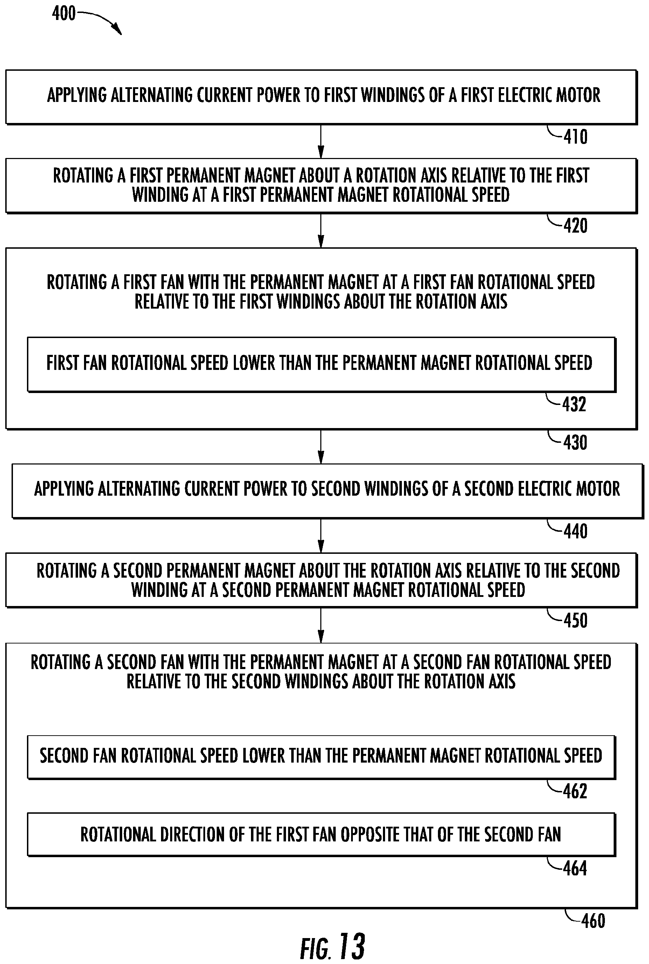

With reference to FIG. 13, a method 400 of propelling an aircraft, e.g., the aircraft 10 (shown in FIG. 1), is shown. The method 400 includes, at a rotary propulsion system, e.g., the rotary propulsion system 200 (shown in FIG. 7) or the rotary propulsion arrangement 300 (shown in FIG. 10), applying AC power to windings of a first electric motor, e.g., the windings 208 (shown in FIG. 8) of the first electric motor 206 (shown in FIG. 8), as shown with box 410. The current flow rotates a permanent magnet of the first electric motor, e.g., the permanent magnet 210 (shown in FIG. 8), about the rotation axis 218 (shown in FIG. 7) at a first electric motor permanent magnet rotational speed, as shown with box 420. Using the rotation of the permanent magnet of the first electric motor, a first fan, e.g., the first fan 202 (shown in FIG. 7) is rotated at a first fan rotational speed relative to the first windings about the rotation axis, e.g., the first fan rotational speed 220 (shown in FIG. 7), as shown with box 430. It is contemplated that the first fan rotational speed be lower than the first electric motor permanent magnet rotational speed, as shown with box 432.

AC power is also applied to windings of a second electric motor, e.g., the windings 214 (shown in FIG. 8) of the second electric motor 212 (shown in FIG. 8), as shown with box 440. The current flow rotates a permanent magnet of the second electric motor, e.g., the permanent magnet 216 (shown in FIG. 8), about the rotation axis at a second permanent magnet rotational speed, as shown with box 450. Using the rotation of the permanent magnet of second electric motor, a second fan is rotated at a second fan rotational speed relative to the windings of the second electric motor about the rotation axis, e.g., the second fan rotational speed 222 (shown in FIG. 7), as shown with box 460. It is contemplated that the second fan rotational speed be lower than the permanent magnet rotational speed of the second electric motor, as shown with box 462. In certain embodiments the direction of rotation of the second fan can be opposite a direction of rotation of the first fan, as shown with box 464.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A rotary propulsion system, comprising:
a fan (102, 104, 202, 204) arranged along a rotation axis;
an electric motor (206, 212, 302, 304) having windings (208, 214, 308, 336) and a permanent magnet (210, 216, 310, 338) (118) arranged along the rotation axis and operatively connected to the fan; and
a reduction gear set (232, 234) extending about the rotation axis and coupling the electric motor to the fan, wherein the permanent magnet is rotatable relative to the windings and the fan to rotate the fan using the electric motor at a rotational speed that is lower than a rotational speed of the permanent magnet;
wherein the fan is a first fan (202) and further comprising a second fan (204), the second fan coaxially supported for rotation about the rotation axis with the first fan; and
further comprising a shaft (230, 318, 332) supporting the fan and coupled to the fan by the reduction gear set, wherein the winding or the permanent magnet is fixed relative to the shaft, wherein the shaft is a first shaft and further comprising a second shaft, the second shaft arranged coaxially with the first shaft along the rotation axis and supported for rotation relative to the first shaft;
wherein the electric motor is a first electric motor (206, 302), the winding is a first winding (208, 308), and the permanent magnet is a first permanent magnet (210, 310), the rotary propulsion system further comprising a second electric motor (212, 304) with a second winding (214, 336) and a second permanent magnet (216, 338), the second winding fixed relative to the first winding and the second permanent magnet rotatable relative to the first permanent magnet and the second winding; and
wherein the reduction gear set is a first reduction gear set (232) and further comprising a second reduction gear set (234), the second reduction gear set axially offset from the first reduction gear set along the rotation axis, wherein the second reduction gear set arranged axially on a side of the first reduction gear set opposite the electric motor.

2. The rotary propulsion system as recited in claim 1, wherein the fan includes a plurality of open-rotor fan blades (108) having a scimitar shape.

3. The rotary propulsion system as recited in claim 1 or 2, further comprising:
a generator (22) connected to the electric motor; and
a gas turbine engine (16) operably connected to the generator, rotational speed of the gas turbine engine being independent of rotational speed of the fan.

4. The rotary propulsion system as recited in any preceding claim, wherein the second permanent magnet arranged on a side of the winding opposite the first permanent magnet, or wherein the second permanent magnet is axially offset from the first permanent magnet.

5. The rotary propulsion system as recited in any preceding claim, wherein the reduction gear set includes a planetary gear arrangement.

6. The rotary propulsion system as recited in claim 5, wherein the planetary gear arrangement axially overlaps the electric motor, or wherein the planetary gear arrangement is axially offset from the electric motor.

7. The rotary propulsion system as recited in claim 5, wherein the planetary gear arrangement comprises:
a sun gear (130, 238, 330, 350) fixed in rotation relative to the permanent magnet;
a ring gear (134, 242, 326, 346) fixed in rotation relative to the fan; and
a plurality of planetary gears (132, 240, 328, 348) distributed circumferentially about the rotation axis and intermeshed with the sun gear and the ring gear.

8. An aircraft, comprising: the rotary propulsion system as recited in any preceding claim, an airframe (12) supporting the rotary propulsion system (100, 200, 300).

9. The aircraft as recited in claim 8, wherein the rotation axis is substantially horizontal relative to the direction of gravity when the aircraft is normal, level flight, or wherein the rotation axis is substantially vertical relative to the direction of gravity when the aircraft is normal, level flight.

10. A method of propelling an aircraft, comprising:
at a rotary propulsion system as recited in any of claims 1 to 7,
rotating the first permanent magnet about the rotation axis relative to the first winding at a first permanent magnet rotational speed;
rotating the first fan with the first permanent magnet at a first fan rotational speed relative to the first winding about the rotation axis, the first fan rotational speed being lower than the first permanent magnet rotational speed; and
rotating the second fan at a second fan rotational speed relative to the second winding about the rotation axis, the second fan rotational speed being lower than the second permanent magnet rotational speed, the second fan rotating in a direction opposite rotation of the first fan about the rotation axis.

## Patentansprüche

1. Drehantriebssystem, umfassend:
ein Gebläse (102, 104, 202, 204), das entlang einer Drehachse angeordnet ist;
einen Elektromotor (206, 212, 302, 304), der Wicklungen (208, 214, 308, 336) und einen Permanentmagneten (210, 216, 310, 338) aufweist, der entlang der Drehachse angeordnet ist und mit dem Gebläse wirkverbunden ist; und
einen Untersetzungszahnradsatz (232, 234), der sich um die Drehachse erstreckt und den Elektromotor mit dem Gebläse koppelt, wobei der Permanentmagnet zum Drehen des Gebläses unter Verwendung des Elektromotors mit einer Drehzahl, die niedriger ist als eine Drehzahl des Permanentmagneten, relativ zu den Wicklungen und dem Gebläse drehbar ist;
wobei das Gebläse ein erstes Gebläse (202) ist und ferner umfassend ein zweites Gebläse (204), wobei das zweite Gebläse koaxial zur Drehung um die Drehachse mit dem ersten Gebläse getragen wird; und
ferner umfassend eine Welle (230, 318, 332), die das Gebläse trägt und durch den Untersetzungszahnradsatz an das Gebläse gekoppelt ist, wobei die Wicklung oder der Permanentmagnet relativ zu der Welle fixiert ist, wobei die Welle eine erste Welle ist und ferner umfassend eine zweite Welle, wobei die zweite Welle entlang der Drehachse koaxial zu der ersten Welle angeordnet ist und für eine Drehung relativ zu der ersten Welle getragen wird;
wobei der Elektromotor ein erster Elektromotor (206, 302) ist, die Wicklung eine erste Wicklung (208, 308) ist und der Permanentmagnet ein erster Permanentmagnet (210, 310) ist, wobei das Drehantriebssystem ferner einen zweiten Elektromotor (212, 304) mit einer zweiten Wicklung (214, 336) und einem zweiten Permanentmagneten (216, 338) umfasst, wobei die zweite Wicklung relativ zu der ersten Wicklung fixiert ist und der zweite Permanentmagnet relativ zu dem ersten Permanentmagneten und der zweiten Wicklung drehbar ist; und
wobei der Untersetzungszahnradsatz ein erster Untersetzungszahnradsatz (232) ist und ferner umfassend einen zweiten Untersetzungszahnradsatz (234), wobei der zweite Untersetzungszahnradsatz axial von dem ersten Untersetzungszahnradsatz entlang der Drehachse versetzt ist, wobei der zweite Untersetzungszahnradsatz axial auf einer dem Elektromotor gegenüberliegenden Seite des ersten Untersetzungszahnradsatzes angeordnet ist.

2. Drehantriebssystem nach Anspruch 1, wobei das Gebläse eine Vielzahl von Offenrotor-Gebläseflügeln (108) beinhaltet, die eine Sichelform aufweist.

3. Drehantriebssystem nach Anspruch 1 oder 2, ferner umfassend:
einen Generator (22), der mit dem Elektromotor verbunden ist; und
ein Gasturbinentriebwerk (16), das mit dem Generator wirkverbunden ist, wobei die Drehzahl des Gasturbinentriebwerks unabhängig von der Drehzahl des Gebläses ist.

4. Drehantriebssystem nach einem der vorhergehenden Ansprüche, wobei der zweite Permanentmagnet auf einer dem ersten Permanentmagneten gegenüberliegenden Seite der Wicklung angeordnet ist oder wobei der zweite Permanentmagnet axial von dem ersten Permanentmagneten versetzt ist.

5. Drehantriebssystem nach einem der vorhergehenden Ansprüche, wobei der Untersetzungszahnradsatz eine Planetengetriebeanordnung beinhaltet.

6. Drehantriebssystem nach Anspruch 5, wobei die Planetengetriebeanordnung den Elektromotor axial überlappt oder wobei die Planetengetriebeanordnung axial von dem Elektromotor versetzt ist.

7. Drehantriebssystem nach Anspruch 5, wobei die Planetengetriebeanordnung Folgendes umfasst:
ein Sonnenrad (130, 238, 330, 350), das relativ zu dem Permanentmagneten drehfest ist;
ein Hohlrad (134, 242, 326, 346), das relativ zu dem Gebläse drehfest ist; und
eine Vielzahl von Planetenrädern (132, 240, 328, 348), die in Umfangsrichtung um die Drehachse verteilt sind und mit dem Sonnenrad und dem Hohlrad kämmen.

8. Flugzeug, umfassend: das Drehantriebssystem nach einem der vorhergehenden Ansprüche, eine Flugzeugzelle (12), die das Drehantriebssystem (100, 200, 300) trägt.

9. Flugzeug nach Anspruch 8, wobei die Drehachse relativ zu der Richtung der Schwerkraft im Wesentlichen horizontal verläuft, wenn sich das Flugzeug in normalem Horizontalflug befindet, oder wobei die Drehachse relativ zu der Richtung der Schwerkraft im Wesentlichen vertikal verläuft, wenn sich das Flugzeug in normalem Horizontalflug befindet.

10. Verfahren zum Antrieb eines Flugzeugs, umfassend:
Drehen des ersten Permanentmagneten um die Drehachse relativ zu der ersten Wicklung mit einer ersten Permanentmagnetdrehzahl in einem Drehantriebssystem nach einem der Ansprüche 1 bis 7;
Drehen des ersten Gebläses mit dem ersten Permanentmagneten um die Drehachse relativ zu der ersten Wicklung mit einer ersten Gebläsedrehzahl, wobei die erste Gebläsedrehzahl niedriger ist als die erste Permanentmagnetdrehzahl; und
Drehen des zweiten Gebläses um die Drehachse relativ zu der zweiten Wicklung mit einer zweiten Gebläsedrehzahl, wobei die zweite Gebläsedrehzahl niedriger ist als die zweite Permanentmagnetdrehzahl und wobei das zweite Gebläse in einer dem ersten Gebläse entgegengesetzten Richtung um die Drehachse dreht.

## Revendications

1. Système de propulsion rotatif, comprenant :
un ventilateur (102, 104, 202, 204) agencé le long d'un axe de rotation ;
un moteur électrique (206, 212, 302, 304) comportant des enroulements (208, 214, 308, 336) et un aimant permanent (210, 216, 310, 338) agencés le long de l'axe de rotation et reliés de manière fonctionnelle au ventilateur ; et
un ensemble d'engrenages réducteurs (232, 234) se prolongeant autour de l'axe de rotation et couplant le moteur électrique au ventilateur, dans lequel l'aimant permanent est rotatif par rapport aux enroulements et au ventilateur pour faire tourner le ventilateur à l'aide du moteur électrique à une vitesse de rotation qui est inférieure à une vitesse de rotation de l'aimant permanent ;
dans lequel le ventilateur est un premier ventilateur (202) et comprend également un second ventilateur (204), le second ventilateur étant supporté coaxialement pour tourner autour de l'axe de rotation avec le premier ventilateur ; et
comprenant également un arbre (230, 318, 332) supportant le ventilateur et couplé au ventilateur par l'ensemble réducteur, dans lequel l'enroulement ou l'aimant permanent sont fixe par rapport à l'arbre, dans lequel l'arbre est un premier arbre et comprenant également un second arbre, le second arbre est agencé coaxialement au premier arbre le long de l'axe de rotation et supporté pour une rotation par rapport au premier arbre ;
dans lequel le moteur électrique est un premier moteur électrique (206, 302), l'enroulement est un premier enroulement (208, 308) et l'aimant permanent est un premier aimant permanent (210, 310), le système de propulsion rotatif comprenant également un second moteur électrique (212, 304) avec un second enroulement (214, 336) et un second aimant permanent (216, 338), le second enroulement étant fixe par rapport au premier enroulement et le second aimant permanent pouvant tourner par rapport au premier aimant permanent et au second enroulement ; et
dans lequel l'ensemble d'engrenages réducteurs est un premier ensemble d'engrenages réducteurs (232) et comprend également un second ensemble d'engrenages réducteurs (234), le second ensemble d'engrenages réducteurs étant décalé axialement par rapport au premier ensemble d'engrenages réducteurs le long de l'axe de rotation, dans lequel le second ensemble d'engrenages réducteurs sont disposés axialement sur un côté du premier ensemble d'engrenages réducteurs opposé au moteur électrique.

2. Système de propulsion rotatif selon la revendication 1, dans lequel le ventilateur comporte une pluralité de pales de ventilateur à rotor ouvert (108) ayant une forme de cimeterre.

3. Système de propulsion rotatif selon la revendication 1 ou 2, comprenant également :
un générateur (22) relié au moteur électrique ; et
un moteur à turbine à gaz (16) relié de manière fonctionnelle au générateur, la vitesse de rotation du moteur à turbine à gaz étant indépendante de la vitesse de rotation du ventilateur.

4. Système de propulsion rotatif selon une quelconque revendication précédente, dans lequel le second aimant permanent est agencé sur un côté de l'enroulement opposé au premier aimant permanent, ou dans lequel le second aimant permanent est décalé axialement par rapport au premier aimant permanent.

5. Système de propulsion selon une quelconque revendication précédente, dans lequel l'ensemble d'engrenages réducteurs comporte un agencement pignons satellites.

6. Système de propulsion rotatif selon la revendication 5, dans lequel l'agencement pignons satellites chevauche axialement le moteur électrique, ou dans lequel l'agencement de pignons satellites est décalé axialement par rapport au moteur électrique.

7. Système de propulsion rotatif selon la revendication 5, dans lequel l'agencement de pignons satellites comprend :
une roue solaire (130, 238, 330, 350) fixe en rotation par rapport à l'aimant permanent ;
une couronne dentée (134, 242, 326, 346) fixe en rotation par rapport au ventilateur ; et
une pluralité de pignons satellites (132, 240, 328, 348) répartis circonférentiellement autour de l'axe de rotation et engrenés avec la roue solaire et la couronne dentée.

8. Aéronef, comprenant : le système de propulsion rotatif selon une quelconque revendication précédente, une cellule (12) supportant le système de propulsion rotatif (100, 200, 300).

9. Aéronef selon la revendication 8, dans lequel l'axe de rotation est sensiblement horizontal par rapport à la direction de la gravité lorsque l'aéronef est en vol normal en palier, ou dans lequel l'axe de rotation est sensiblement vertical par rapport à la direction de la gravité lorsque l'aéronef est en vol normal en palier.

10. Procédé de propulsion d'un aéronef, comprenant :
dans un système de propulsion rotatif selon l'une quelconque des revendications 1 à 7, le fait de faire tourner le premier aimant permanent autour de l'axe de rotation par rapport au premier enroulement à une première vitesse de rotation d'aimant permanent ;
le fait de faire tourner le premier ventilateur avec le premier aimant permanent à une première vitesse de rotation du ventilateur par rapport au premier enroulement autour de l'axe de rotation, la première vitesse de rotation du ventilateur étant inférieure à la première vitesse de rotation de l'aimant permanent ; et
le fait de faire tourner le second ventilateur à une seconde vitesse de rotation de ventilateur par rapport au second enroulement autour de l'axe de rotation, la seconde vitesse de rotation de ventilateur étant inférieure à la seconde vitesse de rotation de l'aimant permanent, le second ventilateur tournant dans une direction opposée à la rotation du premier ventilateur autour de l'axe de rotation.
